# EUROPÄISCHE PATENTSCHRIFT

(11) **EP 0 445 313 B1**
(45) Veröffentlichungstag und Bekanntmachung des Hinweises auf die Patenterteilung: **08.12.1993**
(21) Anmeldenummer: 90104169.9
(22) Anmeldetag: 03.03.1990
(51) Int. Cl.: B29C 45/27

(54) **Verteiler**
Manifold
Distributeur

(43) Veröffentlichungstag der Anmeldung: 11.09.1991
(73) Patentinhaber: Dipl.-Ing. Herbert Günther Gesellschaft mbH, A-2380 Perchtoldsdorf (AT)
(72) Erfinder: Günther, Herbert, Dipl.-Ing., W-3559 Allendorf/Eder (DE)
(74) Vertreter: Olbricht, Karl Heinrich, Dipl.-Phys.

(56) Entgegenhaltungen:
- EP-A- 0 274 005
- EP-A- 0 284 920
- FR-A- 2 552 704

## Beschreibung

Die Erfindung betrifft einen Verteiler gemäß dem Oberbegriff von Anspruch 1.

Herkömmliche Verteiler sind Blöcke, die zum Teil über eingebaute Heizpatronen oder Rohrheizkörper beheizt werden. Die thermische Trennung vom übrigen Spritzguß-Werkzeug ist oft mangelhaft. Zum Erwärmen des Blockes wird stets eine verhältnismäßig große Aufheizenergie benötigt; entsprechend lang sind die Anheizzeiten. Ferner bereitet die Reinigung Probleme, insbesondere bei innenbeheizten Systemen.

In der US-A-3 091 812 ist ein Verteiler beschrieben, der gegenüber dem umgebenden Block isoliert ist. Ein entweder außenbeheiztes oder selbstheizendes, materialführendes Rohr ist in einer Isoliermasse eingebettet, die ihrerseits in dem Block von einem anliegenden leitenden T-Rohr umschlossen ist. Letzteres ist an seinen Enden jeweils mit einer Stahlplatte verschweißt, die gegenüber dem Materialrohr nicht isoliert ist, so daß hier eine massive Wärmeabfuhr mit erheblichen Energieverlusten auftritt. Es besteht unkontrollierter Einfluß auf die Werkzeugtemperatur. Die Anordnung läßt sich nicht oder höchstens werksseitig und dann mit außerordentlich großem mechanisch-chemischem Aufwand reinigen; im Wartungsfalle muß sie der Anwender durch eine gleichartige Vorrichtung ersetzen.

Ähnliches gilt für ein Heißkanalsystem nach der US-A-3 520 026, wobei ebenfalls der gesamte Verteilerblock entweder über Wärmebrücken oder als selbstheizende Vorrichtung aufgeheizt wird und am Materialübertritt ein steiler Temperaturabfall unvermeidlich ist. Die infolge des hohen Bearbeitungsdruckes auftretenden großen Kräfte müssen auch hier um den Block herumgeführt werden, was den konstruktiven Aufwand entsprechend steigert.

Aus der DE-A1-3 710 139 geht ein Heißkanal-Verteilerblock mit einer Längsbohrung hervor, die einen Einsatzkörper aufnimmt, der Nuten für Heizwicklungen hat. In quer zur Längsbohrung verlaufenden Bohrungen sind Knotenelemente eingesetzt, die im Innenrohrbereich einen Wärmedehnungsausgleich möglich machen sollen. Damit das funktioniert, ist eine extrem genaue Heißabdichtung unerläßlich, was mit entsprechend hohen Aufwendungen verbunden ist.

Die EP-A2-0 274 005 beschreibt einen Verteiler, bei dem das Materialrohr zusammen mit der Heizeinrichtung und einer sie konzentrisch umschließenden Hülse eine selbständige Baueinheit bildet. Sie ist stirnseitig in das Verteilergehäuse ein- bzw. daraus ausbaubar und ihm gegenüber thermisch ein- oder mehrstufig isoliert. Die Heizeinrichtung ist ein Widerstandsrohr spezieller Geometrie oder eine 220-V-Wicklung, womit dem inneren Materialrohr an Materialübertritten mehr und in den Bereichen dazwischen weniger Wärme zugeführt wird. Außen sind zum Gehäuse hin Isolierräume vorhanden, die im Betrieb mit erstarrtem Kunststoff gefüllt sind. Unter Stützringen weist die Hülse Luftspalte auf, die weiter zur thermischen Isolierung beitragen.

Um das vorhandene Bedürfnis nach einer Fortentwicklung zu befriedigen, ist es Ziel der Erfindung, an einem Verteiler der letztgenannten Art auf möglichst einfache Weise die mechanischen und thermischen Eigenschaften weiter zu verbessern und bei minimalem Wärmeübergang an das Gehäuse hohe elektrische Sicherheit zu gewährleisten. Unter Beibehaltung bequemer Montage, Wartung und Reinigung des Systems soll ferner der energetische und zeitliche Betriebsaufwand herabgesetzt werden.

Merkmale der Erfindung sind im Anspruch 1 angegeben. Weiterbildungen sind Gegenstand der Ansprüche 2 bis 18.

Nach einem wichtigen Merkmal der Erfindung ist der Hülsenkörper der in das Gehäuse eingesetzten, z.B. patronenförmigen Baueinheit aus Hülsenabschnitten zusammengesetzt, von denen jeder im Bereich eines Materialübertritts auf eine als Bund ausgebildete Radialabstützung des Materialrohrs fest aufgebracht ist. Dies ergibt einen überaus stabilen Verbundkörper, dessen Innenraum von dem zu verarbeitenden Kunststoff nicht erreicht werden kann, weil der äußere Hülsenkörper über seine gesamte Länge geschlossen ist. Unabhängig von der Größe bzw. Länge des Verteilers hat man so einen definierten Aufbau, der in einfacher Weise wärmeisolierbar ist, so daß die im Inneren freigesetzte Wärmeenergie größtenteils an das Material übergeht und lediglich an den wenigen vorhandenen Radialabstützungen ein begrenzter Wärmeabfluß nach außen stattfinden kann.

Zur Festigkeit der Konstruktion trägt es wesentlich bei, wenn gemäß Anspruch 2 jeder Hülsenabschnitt mit einem radial einspringenden Zentralteil auf den zugeordneten Bund aufgeschrumpft oder aufgeschweißt ist. Gegenüber der herkömmlichen Heißkanaltechnik ist der Herstellungsaufwand dadurch wesentlich herabgesetzt.

Indem der bzw. jeder Bund des Materialrohrs laut Anspruch 3 mit Umfangsaussparungen versehen ist, namentlich gemäß Anspruch 4 mit parallel oder schräg zur Axialrichtung verlaufenden Außenkanälen zur Aufnahme von Längsstegen der Heizeinrichtung, erreicht man sowohl konstruktive Vorteile als auch Energie-Einsparungen im Betrieb.

Zur Gleichmäßigkeit der Temperaturverteilung leistet das Merkmal von Anspruch 5 einen erheblichen Beitrag, wonach die Heizeinrichtung mit dem Materialrohr zu einem Vergußkörper wärmeleitend verbunden ist. Sehr gut eignet sich Aluminium oder eine Aluminiumlegierung, um die Heizeinrichtung, insbesondere eine Wicklung von gleichförmiger oder längsveränderlicher Windungsdichte, bei gegebener elektrischer Isolierung stoffschlüssig mit dem Materialrohr zu verbinden. Dabei überragt gemäß Anspruch 6 jeder Bund des Materialrohrs den Außendurchmesser des Vergußkörpers in Radialrichtung, so daß zwischen dem innen befindlichen Vergußkörper und dem ihn umschließenden Hülsenkörper - außer an den Radialabstützungen - ein materialfreier Zwischenraum gebildet ist. Dieser unterstützt die Wärmeisolierung der Anordnung.

Einen erhöhten Wärmewiderstand erzielt man laut Anspruch 7 auch dadurch, daß der bzw. jeder Bund des Materialrohrs zwischen axial äußeren Rippen Radialausnehmungen hat, namentlich Ringtaschen. Diese verringern den Wärmeleitwert zwischen Verguß- und Hülsenkörper, jedoch ohne Beeinträchtigung der Verbundkörper-Festigkeit.

Eine ähnliche Isoliermaßnahme im Außenbereich sieht Anspruch 8 vor, wonach der Hülsenkörper außen Umfangsrippen hat, die satt-passend in einer Gehäusebohrung des Verteilers anliegen und in Axialrichtung äußere Hohlräume trennen. Im Gegensatz zum Stand der Technik, bei dem es dank beliebig angeordneter Stützbrücken zu einem ungewollten oder unkontrollierten Wärmeabfluß kam, gewährleistet die Erfindung einen reproduzierbar geringen Wärmeübergang an verhältnismäßig wenigen, schmal ausgebildeten Stützbereichen.

Selbständiger Schutz wird beansprucht für die Maßnahme des Anspruchs 9, daß die Hülsenabschnitte miteinander durch mittels Umfangsrippen materialfrei gehaltene Fügedichtungen verbunden sind. Diese können nach Anspruch 10 derart überlappend gestaltet sein, daß in Hohlräumen zwischen den Umfangsrippen wirkender Druck die Überlappungen selbstschließend aufeinanderpreßt. Gelangt also unter besonderen Umständen doch Material in einen äußeren Hohlraum zwischen die Umfangsrippen, welche eine Fügedichtung axial begrenzen, so preßt der Verarbeitungsdruck die äußere Überlappung auf die innere und dichtet den Hülsenkörper dadurch noch besser ab.

Um Reaktionskräfte an den Materialübertritten abzufangen, sieht Anspruch 11 vor, daß jeweils diametral gegenüber außen ein Stützsegment an dem betreffenden Hülsenabschnitt vorhanden ist. Dies trägt dazu bei, den Verbundkörper gestaltfest zu halten und Deformationen weitestgehend zu unterbinden.

Nach innen, nämlich zwischen dem Vergußkörper und dem Hülsenkörper, können gemäß Anspruch 12 Ringkammern vorhanden sein, welche materialfrei bleiben, da sie durch die Radialabstützungen in Axialrichtung voneinander getrennt sind. Vorteilhaft geht laut Anspruch 13 je eine Ringkammer an den Enden des Vergußkörpers in eine axiale Freizone über. Auch dadurch wird eine sehr geringe Wärmeübertragung an das Gehäuse erzielt.

Wenn die Enden des Hülsenkörpers nach Anspruch 14 formschlüssig in Anlagestücken aufgenommen werden, die den Verteiler in Axialrichtung dicht abschließen, hat man einerseits hohe Stabilität, andererseits gute Anschluß- und Reinigungsmöglichkeiten.

Die Steuerung der Heizeinrichtung unterstützt vorteilhaft ein Thermofühler, der laut Anspruch 15 namentlich von einem stirnseitigen Stopfen her bis in den Bereich einer Radialabstützung ragt, also ganz nahe an den eigentlichen Heißkanal heran.

Anspruch 16 sieht vor, daß der Materialzufuhranschluß radial angeordnet ist, was sich insbesondere für gerade Verteiler anbietet, oder daß er sich stirnseitig anstelle eines Umlenkstopfens befindet.

Gemäß Anspruch 17 ist vorgesehen, daß zur Bildung eines H-förmigen oder Kreuzverteilers zwei oder mehr Baueinheiten in winklig zueinander angeordneten Gehäusebohrungen eingesetzt sind, wobei jeweils ein Materialrohr stirnseitig an eine Rohraussparung eines mit einem Bund versehenen Hülsenabschnitts dicht anschließt. Infolgedessen können sich die Gehäusebohrungen kreuzend durchdringen, was eine besonders einfache und stabile Befestigung der darin eingesetzten Baueinheiten ermöglicht.

Weitere Merkmale, Einzelheiten und Vorteile ergeben sich aus dem Wortlaut der Ansprüche sowie aus der folgenden Beschreibung eines Ausführungsbeispiels anhand der Zeichnung. Darin zeigen:
- Fig. 1: eine Axialschnittansicht durch einen erfindungsgemäßen Verteiler,
- Fig. 2: einen Querschnitt durch den Verteiler entsprechend der Linie II-II in Fig. 1,
- Fig. 3: einen Querschnitt durch einen Vergußkörper des Verteilers entsprechend der Linie III-III in Fig. 1,
- Fig. 4: eine Axialschnittansicht eines H-Verteilers und
- Fig. 5: ein Verteiler-Schema.

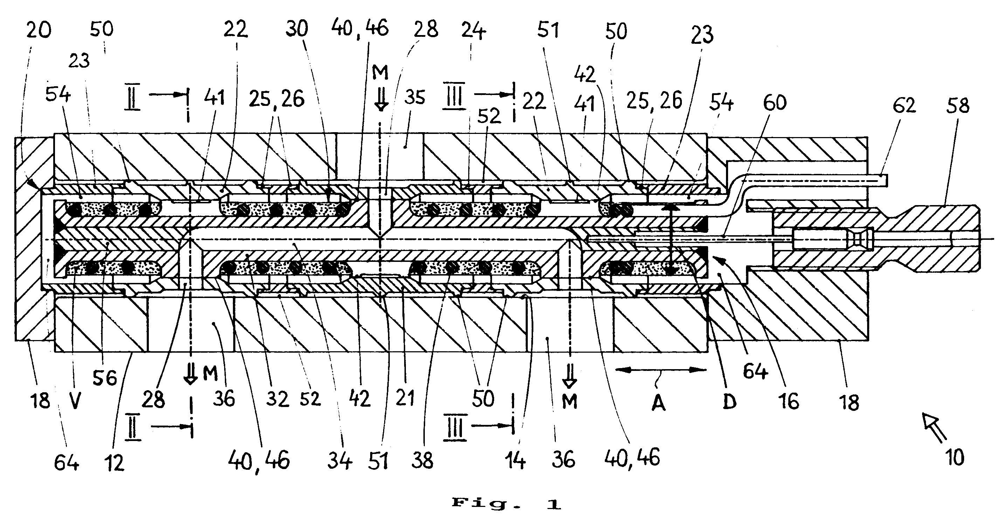

Der in Fig. 1 dargestellte Verteiler ist insgesamt mit 10 bezeichnet. Er hat ein Gehäuse 12 mit einer Gehäusebohrung 14, in das eine patronenartig ausgebildete Baueinheit 16 eingepaßt ist. Anlagestücke 18 bilden beiderseits axiale Abschlüsse für die Baueinheit 16 im Gehäuse 12.

Die Baueinheit bzw. Patrone 16 hat einen Hülsenkörper 20, der aus einer Anzahl von Hülsenabschnitten zusammengesetzt ist, wobei im gezeichneten Beispiel an eine Mittelhülse 21 beiderseits je eine Zwischenhülse 24, eine Übergangshülse 22 und eine Endhülse 23 anschließen. Benachbarte Einzelhülsen haben jeweils an Fügespalten 25 Überlappungen 26, die den Ausgleich von Dehnungen oder Schrumpfungen bei Änderungen der in diesem Bereich herrschenden Temperatur ermöglichen.

Außerdem bilden die Überlappungen 26 paarweise je eine selbstschließende Dichtung. Der Hülsenkörper 20 hat außen Umfangsrippen 50, die satt in der Bohrung 14 anliegen und sehr schmal ausgebildet sein können, um die Wärmeübertragung an das Gehäuse 12 möglichst gering zu halten. Zwischen den einzelnen Umfangsrippen 50 sind äußere Hohlräume 52 vorhanden, welche die Wärmeisolation zwischen der Baueinheit 16 und dem Gehäuse 10 verbessern. Die Hohlräume 52 bleiben dank guter Passung der Umfangsrippen 50 in aller Regel materialfrei. Gelangt aber dennoch Material in einen Hohlraum 52, so preßt der Verarbeitungsdruck die äußere Überlappung 26 auf die innere. Dadurch wird ein Einströmen von Material in den Zwischenraum 54 verhindert, der allgemein eine Ringkammer bildet und den äußeren Hülsenkörper 20 von einem inneren Vergußkörper 30 trennt. Diesen trägt ein Materialrohr 32, das eine elektrisch isoliert aufgebrachte Heizwicklung 38 aufweist, die mit einem gut wärmeleitenden Vergußmaterial V, z.B. Aluminium, stoffschlüssig verbunden ist.

Rohraussparungen 28 des Hülsenkörpers 20 stehen Materialübertritte 35, 36 des einen Hauptkanal 34 enthaltenden Rohrs 32 gegenüber. An einer Öffnung 35 strömt das zu verarbeitende Material ein, das im Hauptkanal 34 weiter- und durch zwei oder mehr Übertritte 36 ausfließt. Die Material-Strömungsrichtungen sind in Fig. 1 mit M bezeichnet.

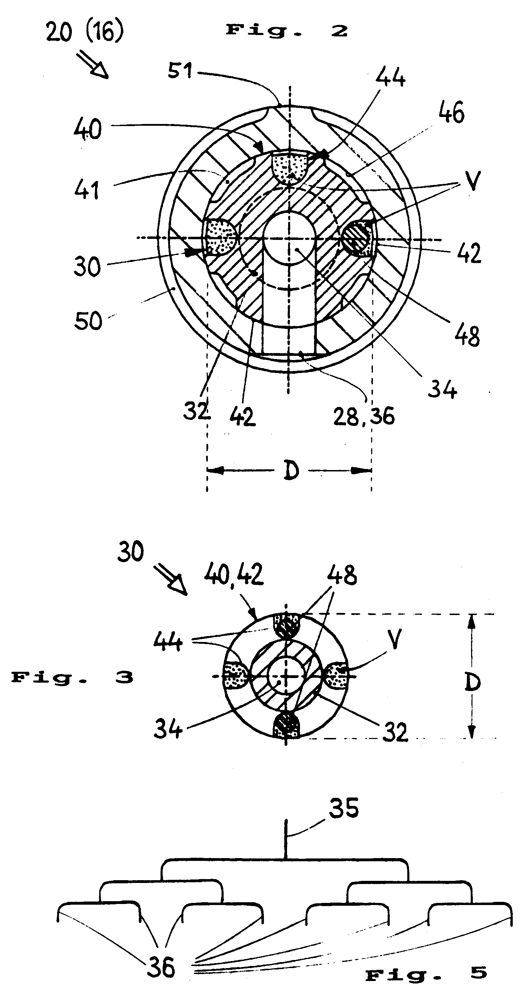

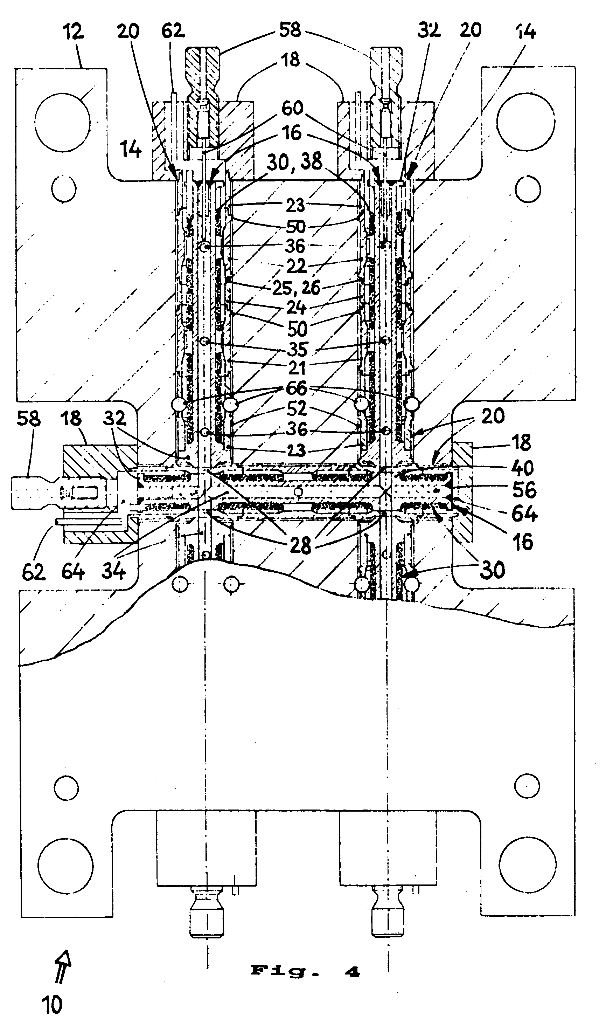

An den Materialübertritten 35, 36 ist der Hülsenkörper 20 mit dem Vergußkörper 30 bereichsweise fest verbunden. Das Materialrohr 32 hat in diesen Zonen jeweils eine als Bund 40 ausgebildete flächige Radialabstützung (vergl. Fig. 2 und Fig. 3). Achsparallel sind Außenkanäle 44 eingearbeitet, die zur Aufnahme von Längsstegen 48 der Heizwicklung 38 dienen und ebenso wie diese mit der Vergußmasse V wärmeleitend ausgefüllt sind, so daß eine sehr gute Wärmebrücke zwischen den einzelnen Heizungs-Teilbereichen besteht.

Nachdem die Heizwicklung 38 samt den Längsstegen 48 vergossen ist, wird der Hülsenkörper 20 mit seinen Einzelhülsen 21 bis 24 auf den Vergußkörper 30 aufgeschrumpft. Ein Zentralteil 46 der betreffenden Einzelhülse 21, 22, 23, 24 kommt dabei zur satten Anlage an dem zugeordneten Bund 40 des Materialrohrs 32, so daß die Heißkanal-Öffnungen jeweils dicht an die Rohraussparungen 28 anschließen. Diesen diametral gegenüber hat jede Einzelhülse ein Stützsegment 51 zum Auffangen von Reaktionskräften, die von dem unter Druck ein- bzw. ausströmenden Material M herrühren.

Jeder Bund 40 hat axial äußere Rippen 42, die einen Axialabstand voneinander haben und zwischen denen über den Hauptteil des Umfangs verteilt Ringtaschen 41 vorhanden sind. Diese Gestaltung trägt wesentlich zur Energie-Einsparung bei, weil lediglich die schmal ausgebildeten Rippen 42 und die Stützflächen 40/46 als Wärmebrücken von innen nach außen wirken können.

Nach innen ist in der Baueinheit 16 der schon erwähnte Trenn- oder Zwischenraum in Form wärmeisolierender Ringkammern 54 vorhanden, die zwischen den einzelnen Hülsen 21 bis 24 des Hülsenkörpers 20 und dem Vergußkörper 30 gebildet sind. Teil-Unterbrechungen der axial durchlaufenden Ringkammern 54 sind nur im Bereich jedes Bundes bzw. jeder Radialabstützung 40 gegeben.

Nahe den Materialaustritten 36 ist Verteiler-Hauptkanal 34 axial jeweils durch einen Umlenkstopfen 56 abgeschlossen. In einen davon (in Fig. 1 rechts) kann ein Thermofühler 60 ragen, der von einem Verschlußstopfen 58 in dem zugehörigen Anlage- bzw. Abschlußstück 18 gehalten ist. Die Wicklungsanschlüsse lassen sich daneben einführen, wie das Beispiel des Anschlusses 62 der vergossenen Heizwicklung 38 zeigt.

Die Ringkammern 54 können sich an beiden Enden als axiale Freizonen 64 fortsetzen, um bestmögliche Isolation zu gewährleisten. Das Hülsenrohr 20 stützt sich zweckmäßig in Axialrichtung A an beiden Enden in den Anlagestücken bzw. Abschlüssen 18 ab, die zugleich auch die endseitigen Hohlräume 52 begrenzen.

Wichtig ist der besonders stabile Aufbau mit hohem Wärmewiderstand, der aus der vergrößerten Querschnittsansicht von Fig. 2 (in Verbindung mit Fig. 3) ersichtlich ist. Der aus dem Materialrohr 32 und der Heizwicklung 38 gebildete Vergußkörper 30 hat einen Außendurchmesser D, der lediglich an den Enden und an jedem Bund 40 radial geringfügig überragt wird, so daß die vergossene Heizwicklung 38 zuverlässig gehalten und zugleich die bequeme Einführung des Vergußkörpers 30 in den daran zu befestigenden Hülsenkörper 20 möglich ist. An die radial vorstehenden Flächenteile des Bundes 40 bzw. seiner Rippen 42 legt sich der Zentralteil 46 der betreffenden Einzelhülse des Hülsenkörpers 20 beim Aufschrumpfen satt an. Dadurch bildet die Baueinheit 16 einen überaus stabilen, patronenförmigen Verbundkörper.

Solche Patronen erlauben es, die verschiedensten Verteiler-Bauformen zu verwirklichen. Fig. 4 zeigt das Anwendungsbeispiel eines H-Verteilers 10, bei dem jeweils zwei miteinander fluchtende Baueinheiten 16 in zwei parallelen vertikalen Gehäusebohrungen 14 von oben und unten her mit einer Quer-Baueinheit kreuzend verbunden sind. Durch insgesamt fünf gleichartige Baueinheiten 16 ist hiermit ein Verteiler geschaffen, dessen Hauptkanäle 34 sämtlich untereinander in Verbindung stehen, indem in der Mitte an den stirnseitigen Enden der paarweise miteinander fluchtenden senkrechten Baueinheiten kein Verschluß vorgesehen ist, sondern die einzelnen Kanäle 34 jeweils über eine Rohraussparung 28 an die äußeren Materialübertritte der waagrechten Patrone 16 anschließen. Nur letztere ist einseitig axial durch den Verschlußstopfen 58 abgeschlossen.

Die vertikalen Baueinheiten 16 sind mittels Verstiftungen 66 im Gehäuse 12, in der Verteilerplatte also, lagefixiert. Sie bestimmen ihrerseits die Lage der Quereinheit 16, deren Abschlußstücke 18 außerdem die axiale Festlegung gewährleisten. Die auf einem Absatz der Endabschnitte des Materialsrohrs 32 jeweils aufgeschrumpften Hülsenenden 23, welche über die Zwischenhülsen 24 der Quereinheit 16 an deren Bünden 40 anliegen, bewirken die stirnseitige Abstützung der Vertikaleinheiten, so daß die beim Spritzvorgang auftretenden Reaktionskräfte zuverlässig aufgenommen werden.

Die Erfindung ist nicht auf die dargestellten Ausführungsformen beschränkt. So können die Außenkanäle 44 an dem bzw. jedem Bund 40 schräg oder gewunden angeordnet sein, unter Umständen mit Anpassung an die Windungssteigung der Wicklung 38.

Zur Raumausnutzung kann ferner das Materialrohr 32 als Doppel- oder Mehrfachrohr gestaltet sein, indem neben dem gezeichneten Hauptkanal 34 an der Stelle jedes Austritts ein Querübergang zu je einem (nicht dargestellten) Parallelkanal vorgesehen ist, der seinerseits zwei Ausgänge hat, so daß insgesamt vier Materialaustritte 36 vorhanden sind. Mit einem an den Ausgängen quer anschließenden weiteren Parallelkanal, der sich ebenfalls im Querschnitt des Materialrohrs 32 gut unterbringen läßt, kann man die Anzahl der Materialaustritte 36 wiederum verdoppeln. Dies ist im Schema der Fig. 5 - unabhängig von der Rohranordnung - veranschaulicht. Wesentlich ist hierbei, daß zu allen Abgängen bzw. Materialaustritten 36 gleiche Fließwege bestehen und daß infolgedessen auch jeweils gleicher Druckabfall stattfindet, damit die Produkte gleichförmig gespritzt werden.

Man erkennt, daß bei dem erfindungsgemäßen Verteiler 10 Längenänderungen, welche infolge von Wärmedehnung und Abkühlung in verschiedenen Arbeitsphasen stattfinden, die Funktion nicht beeinflussen. Schmal ausgebildete Stützbereiche und gesicherte Hohlräume bewirken eine ausgezeichnete Wärmeisolation, so daß die Temperatur des Verteilergehäuses vorzugsweise jener des Spritzgußwerkzeugs entspricht, z.B. 80 ^{o}C, während das zu verarbeitende Material in dem beheizten Rohr 32 beispielsweise 300 ^{o}C heiß ist. Die durch solche Gradienten bedingten Maßänderungen werden von dem Hülsenkörper 20 unter guter Abdichtung aufgefangen. Dessen überaus stabile Befestigung an dem inneren Vergußkörper 30 gewährleistet auch bei sehr hohen Temperaturen und Drücken optimale Betriebseigenschaften. Die Heizeinrichtung 38 des erfindungsgemäßen Verteilers 10 kann für Netzspannung ausgelegt sein, doch eignet sich der erfindungsgemäße Aufbau auch hervorragend für Niederspannungs-Speisung.

## Patentansprüche

1. Verteiler für Spritzguß-Heißkanalsysteme, mit einem insbesondere blockförmigen Gehäuse (12) und wenigstens einer darin stirnseitig einsetzbaren Baueinheit (16), die ein wärmeisoliertes materialführendes Rohr (32) aufweist, das stirnseitig und/oder am Umfang Materialübertritte (35, 36) sowie eine z.B. als Wicklung oder Widerstandsband ausgebildete Heizeinrichtung (38) hat, die mit elektrischer Isolierung das Materialrohr (32) umschließt und ihrerseits von einem an den Materialübertritten mit Rohraussparungen (28) versehenen Hülsenkörper (20) umschlossen ist, dadurch **gekennzeichnet**, daß der Hülsenkörper (20) aus Hülsenabschnitten (21, 22, 23, 24) zusammengesetzt ist, von denen jeder im Bereich eines Materialübertritts (35, 36) auf eine als Bund (40) ausgebildete Radialabstützung des Materialrohrs (32) fest aufgebracht ist.

2. Verteiler nach Anspruch 1, dadurch **gekennzeichnet**, daß jeder Hülsenabschnitt (21, 22, 23, 24) mit einem radial einspringenden Zentralteil (46) auf den zugeordneten Bund (40) aufgeschrumpft oder aufgeschweißt ist.

3. Verteiler nach Anspruch 1 oder 2, dadurch **gekennzeichnet**, daß der bzw. jeder Bund (40) des Materialrohrs (32) mit Umfangsaussparungen (41, 44) versehen ist.

4. Verteiler nach Anspruch 3, dadurch **gekennzeichnet**, daß jeder Bund (40) des Materialrohrs (32) parallel oder schräg zur Axialrichtung (A) verlaufende Außenkanäle (44) zur Aufnahme von Längsstegen (48) der Heizeinrichtung (38) aufweist.

5. Verteiler nach einem der Ansprüche 1 bis 4, dadurch **gekennzeichnet**, daß die Heizeinrichtung (38), insbesondere eine Wicklung von gleichförmiger oder längsveränderlicher Windungsdichte, mit dem Materialrohr (32) zu einem Vergußkörper (30) wärmeleitend verbunden ist.

6. Verteiler nach Anspruch 5, dadurch **gekennzeichnet**, daß jeder Bund (40) des Materialrohrs (32) den Außendurchmesser (D) des Vergußkörpers (30) radial überragt.

7. Verteiler nach einem der Ansprüche 3 bis 6, dadurch **gekennzeichnet**, daß der bzw. jeder Bund (40) des Materialrohrs (32) axial zwischen äußeren Rippen (42) Radialausnehmungen hat, namentlich Ringtaschen (41).

8. Verteiler nach einem der Ansprüche 1 bis 7, dadurch **gekennzeichnet**, daß der Hülsenkörper (20) außen Umfangsrippen (50) hat, die satt-passend in einer Gehäusebohrung (14) des Verteilers (10) anliegen und in Axialrichtung (A) äußere Hohlräume (52) trennen.

9. Verteiler nach wenigstens einem der Ansprüche 1 bis 8, dadurch **gekennzeichnet**, daß die Hülsenabschnitte (21, 22, 23, 24) miteinander durch mittels Umfangsrippen (50) materialfrei gehaltene Fügedichtungen (25/26) verbunden sind.

10. Verteiler nach Anspruch 9, dadurch **gekennzeichnet**, daß die Enden der Hülsenabschnitte (21, 22, 23, 24) sich in Axialrichtung (A) an den Fügespalten (25) derart überlappen, daß in Hohlräumen (52) zwischen den Umfangsrippen (50) wirkender Druck die Überlappungen (26) selbstschließend aufeinanderpreßt.

11. Verteiler nach wenigstens einem der Ansprüche 1 bis 10, dadurch **gekennzeichnet**, daß jeweils diametral gegenüber einem Materialübertritt (35, 36) an dem Hülsenabschnitt (21, 22, 23, 24) außen ein Stützsegment (51) vorhanden ist.

12. Verteiler nach einem der Ansprüche 5 bis 11, dadurch **gekennzeichnet**, daß zwischen dem Vergußkörper (30) und dem Hülsenkörper (20) Isolierräume in Gestalt innerer Ringkammern (54) vorhanden sind, welche durch Radialabstützungen (40, 46; 42) in Axialrichtung (A) voneinander getrennt sind und materialfrei bleiben.

13. Verteiler nach Anspruch 12, dadurch **gekennzeichnet**, daß je eine Ringkammer (54) an den Enden des Vergußkörpers (30) in eine axiale Freizone (64) übergeht.

14. Verteiler nach einem der Ansprüche 1 bis 13, dadurch **gekennzeichnet**, daß die Enden des Hülsenkörpers (20) formschlüssig in Anlagestücken (18) aufgenommen sind, die den Verteiler (10) axial dicht abschließen.

15. Verteiler nach einem der Ansprüche 1 bis 14, dadurch **gekennzeichnet**, daß namentlich von einem stirnseitigen Stopfen (58) her ein Thermofühler (60) bis in den Bereich einer Radialabstützung (40) ragt.

16. Verteiler nach wenigstens einem der Ansprüche 1 bis 15, dadurch **gekennzeichnet**, daß der Materialzufuhranschluß radial (Übertritt 35) oder stirnseitig z.B. an Stelle eines Umlenkstopfens (56) angeordnet ist.

17. Verteiler nach Anspruch 16, dadurch **gekennzeichnet**, daß zur Bildung eines H-förmigen oder Kreuzverteilers zwei oder mehr Baueinheiten (16) in winklig zueinander angeordneten Gehäusebohrungen (14) eingesetzt sind, wobei jeweils ein Materialrohr (32) stirnseitig an eine Rohraussparung (28) eines mit einem Bund (40) versehenen Hülsenabschnitts (z.B. 21, 22) dicht anschließt.

18. Verteiler nach Anspruch 16 oder 17, dadurch **gekennzeichnet**, daß bei sich kreuzenden Baueinheiten (16) diese mittels Verstiftungen (66) im Gehäuse (12) lagefixiert und ihre Materialrohre (32) mittels stirnseitiger Endabschnitte der aufgerschrumpften Endhülsen (23) an der bzw. jeder quer angeordneten Baueinheit (16) abgestützt sind.

## Claims

1. Manifold for hot runner systems applied in injection moulding, including an especially block-shaped casing (12) and at least one mounting unit (16) which is adapted for facewise insertion therein and which comprises a thermally insulated material flow tube (32) having at its faces and/or at its periphery material flow passages (35, 36) as well as a heating device (38) that is designed e.g. as a coil or a resistor strap, encompasses the flow tube (32) with electric insulation and is, in turn, encompassed by a sleeve body (20) having tubular recesses (28) at the flow passages, wherein the sleeve body (20) is composed of sleeve sections (21, 22, 23, 24) each of which is, in the region of a flow passage (35, 36), permanently mounted onto a collar-type radial support (40) for the flow tube (32).

2. Manifold according to claim 1, wherein each sleeve section (21, 22, 23, 24) includes a radially recessed central portion (46) shrunk or welded onto its associated collar (40).

3. Manifold according to claim 1 or claim 2, wherein the collar (40) or each collar (40), respectively, of the flow tube (32) is provided with peripheral recesses (41, 44).

4. Manifold according to claim 3, wherein the collars (40) include outer channels (44) extending parallel or slanted to an axial direction (A) for receiving longitudinal portions (48) of the heating device (38).

5. Manifold according to any one of claims 1 to 4, wherein the heating device (38), in particular a coil of constant or variable pitch, is thermoconductively bonded to the flow tube (32) so as to form a solid core member (30).

6. Manifold according to claim 5, wherein each collar (40) of the flow tube (32) projects radially over the outer diameter (D) of the core member (30).

7. Manifold according to any one of claims 3 to 6, wherein the collar (40) or each collar (40), respectively, of the flow tube (32) includes radial recesses, in particular ring pockets (41), arranged axially between outer ribs (42).

8. Manifold according to any one of claims 1 to 7, wherein the sleeve body (20) includes outer peripheral ribs (50) snug-fitted in a bore (14) of the casing (12) so as to separate outer hollow compartments (52) in an axial direction (A).

9. Manifold according to at least one of claims 1 to 8, wherein the sleeve sections (21, 22, 23, 24) are inter-connected by by overlaps (25/26) that are sealed against plastics overflow by means of peripheral ribs (50).

10. Manifold according to claim 9, wherein the sleeve sections (21, 22, 23, 24) overlap endwise in an axial direction (A) at their adjoining gaps (25) whereby operational pressure acting in hollow spaces (52) between the peripheral ribs (52) renders the overlaps (26) self-closing.

11. Manifold according to at least one of claims 1 to 10, wherein an outer supporting segment (51) is arranged diametrically opposite each of the flow passages (35, 36).

12. Manifold according to any one of claims 5 to 11, wherein between the core member (39) and the sleeve body (20), insulating spaces made up of inner annular chambers (54) are separated from each other in an axial direction (A) by radial support elements (40, 46; 42) so as to remain free of plastics.

13. Manifold according to claim 12, wherein at the ends of the core member (30), one annular chamber (54) each extends axially into an empty space (64).

14. Manifold according to any one of claims 1 to 13, wherein the ends of the sleeve body (20) positively fit into abutting members (18) which axially seal the manifold (10).

15. Manifold according to any one of claims 1 to 14, wherein a thermosensor (60) extends into the region of a radial support (40), especially from a facing plug (58).

16. Manifold according to at least one of claims 1 to 15, wherein the plastics admission opening is arranged radially (flow passage 35) or facewise, e.g. in place of a deflecting plug (56).

17. Manifold according to claim 17, wherein for forming an H-shaped or cross-type runner, two or more mounting units (16) are inserted in casing bores (14) that extend at an angle to each other, one flow tube (32) each sealingly joining a tubular recess (28) of a sleeve section (e.g. 21, 22) having a collar (40).

18. Manifold according to claim 16 or claim 17, wherein intersecting mounting units (16) are fixed inside the casing (12) by securing pins (66) and wherein the flow tubes (32) are supported by facing end portions (23) of shrunk sections at each transversally arranged mounting unit (16).

## Revendications

1. Distributeur pour des systèmes à canaux chauds de moulage par injection, avec un boîtier (12) notamment en forme de bloc et avec au moins une unité modulaire (16) pouvant y être placée de front et ayant un tuyau conducteur de matériau (32) isolé thermiquement, lequel a de front et/ou sur la circonférence des passages de matériau (35, 36) ainsi qu'un dispositif de chauffage (38) en forme d'enroulement ou de bande à résistance par exemple, qui entoure le tuyau de matériau (32) avec une isolation électrique et qui est lui-même entouré d'un corps de douille (20) pourvu d'évidements de tuyau (28) aux passages de matériau, caractérisé par le fait que le corps de douille (20) est composé de segments de douille (21, 22, 23, 24), dont chacun est fixé solidement au niveau d'un passage de matériau (35, 36) sur un appui radial en forme de collet (40) du tuyau de matériau (32).

2. Distributeur conforme à la revendication 1, caractérisé par le fait que chaque segment de douille (21, 22, 23, 24) est fretté ou soudé sur le collet (40) correspondant avec une partie centrale (46) rentrant radialement.

3. Distributeur conforme à la revendication 1 ou 2, caractérisé par le fait que le ou chaque collet (40) du tuyau de matériau (32) est pourvu d'évidements circonférentiels (41, 44).

4. Distributeur conforme à la revendication 3, caractérisé par le fait que chaque collet (40) du tuyau de matériau (32) a des canaux extérieurs (44) de direction parallèle ou oblique par rapport à la direction axiale (A) pour accueillir des barrettes longitudinales (48) du dispositif de chauffage (38).

5. Distributeur conforme à l'une' des revendications 1 à 4, caractérisé par le fait que le dispositif de chauffage (38), notamment un enroulement d'une densité de spire uniforme ou variable en longueur, est relié au tuyau de matériau (32) de façon à conduire la chaleur et pour former un corps scellé (30).

6. Distributeur conforme à la revendication 5, caractérisé par le fait que chaque collet (40) du tuyau de matériau (32) dépasse radialement le diamétre extérieur (D) du corps scellé (30).

7. Distributeur conforme à l'une des revendications 3 à 6, caractérisé par le fait que le ou chaque collet (40) du tuyau de matériau (32) a axialement entre des nervures extérieures (42) des évidements radiaux, notamment des poches annulaires (41).

8. Distributeur conforme à l'une des revendications 1 à 7, caractérisé par le fait que le corps de douille (20) a à l'extérieur des nervures circonférentielles (50) bien adjacentes dans une perforation (14) du boîtier du distributeur (10) et séparant en direction axiale (A) des espaces creux extérieurs (52).

9. Distributeur conforme à au moins une des revendications 1 à 8, caractérisé par le fait que les segments de douille (21, 22, 23, 24) sont reliés entre eux par des garnitures de joint (25/26) restant libres de matériau grâce à des nervures circonférentielles (50).

10. Distributeur conforme à la revendication 9, caractérisé par le fait que les extrémités des segments de douille (21, 22, 23, 24) se recouvrent en direction axiale (A) aux fentes de joint (25) de telle façon qu'une pression exercée dans des espaces creux (52) entre les nervures circonférentielles (50) presse automatiquement les recouvrements (26) l'un contre l'autre.

11. Distributeur conforme à au moins une des revendications 1 à 10, caractérisé par le fait qu'il y a un segment d'appui (51) respectif à l'extérieur sur le segment de douille (21, 22, 23, 24) diamétralement opposé à un passage de matériau (35, 36).

12. Distributeur conforme à l'une des revendications 5 à 11, caractérisé par le fait qu'entre le corps scellé (30) et le corps de douille (20), il y a des chambres d'isolation en forme de chambres annulaires (54) intérieures, séparées les unes des autres en direction axiale (A) par des appuis radiaux (40, 46; 42) et restant libres de matériau.

13. Distributeur conforme à la revendication 12, caractérisé par le fait qu'une chambre annulaire (54) respective aux extrémités du corps scellé (30) se convertit en une zone axiale libre (64).

14. Distributeur conforme à l'une des revendications 1 à 13, caractérisé par le fait que les extrémités du corps de douille (20) sont accueillies solidairement par la forme dans des pièces de contact (18) fermant de façon étanche le distributeur (10) en direction axiale.

15. Distributeur conforme l'une des revendications 1 à 14, caractérisé par le fait que notamment d'un bouchon (58) sur le côté frontal, une sonde thermique (60) va jusque dans le secteur d'un appui radial (40).

16. Distributeur conforme à au moins une des revendications 1 à 15, caractérisé par le fait que le raccord d'alimentation en matériau est disposé radialement (passage 35) ou de front, par exemple à la place d'un bouchon de déviation (56).

17. Distributeur conforme à la revendication 16, caractérisé par le fait que pour former un distributeur en H ou en croix, deux ou plusieurs unités modulaires (16) sont placées dans des perforations du boîtier (14) disposées de façon angulaire les unes par rapport aux autres, et qu'en même temps un tuyau de matériau respectif (32) se raccorde étroitement à un évidement de tuyau (28) d'un segment de douille (p. ex. 21, 22) pourvu d'un collet.

18. Distributeur conforme la revendication 16 ou 17, caractérisé par le fait qu'en cas d'unités modulaires (16) qui se croisent, celles-ci sont fixées à leur position dans le boîtier (12) par des goupilles (66), et qu'au moyen de secteurs terminaux frontaux des douilles terminales (23) frettées, leurs tuyaux de matériau (32) sont étayés sur la ou chaque unité modulaire (16) disposée transversalement.
